(19) **Europäisches Patentamt / European Patent Office / Office européen des brevets**

(11) **EP 3 796 363 B1**

(12) **EUROPEAN PATENT SPECIFICATION**

(45) Date of publication and mention
of the grant of the patent:
**16.07.2025 Bulletin 2025/29**

(21) Application number: **20196318.8**

(22) Date of filing: **15.09.2020**

(51) International Patent Classification (IPC):
**H01J 49/00** *(2006.01)* **H01J 49/42** *(2006.01)*

(52) Cooperative Patent Classification (CPC):
**H01J 49/4215; H01J 49/0031; H01J 49/426**

(54) **FAST CONTINUOUS SRM ACQUISITIONS WITH OR WITHOUT ION TRAPPING**

SCHNELLE KONTINUIERLICHE SRM-ERFASSUNGEN MIT ODER OHNE IONENEINFANG

ACQUISITIONS RAPIDES ET CONTINUES DE SRM AVEC OU SANS PIÉGEAGE D'IONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2019 US 201916576515**

(43) Date of publication of application:
**24.03.2021 Bulletin 2021/12**

(73) Proprietor: **Thermo Finnigan LLC
San Jose, CA 95134 (US)**

(72) Inventor: **UGAROV, Mikhail V.
San Jose, California 95134 (US)**

(74) Representative: **Boult Wade Tennant LLP
Salisbury Square House
8 Salisbury Square
London EC4Y 8AP (GB)**

(56) References cited:
**US-A1- 2010 084 552 US-A1- 2017 047 212
US-A1- 2018 166 262 US-B2- 8 604 420**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD

The present disclosure generally relates to the field of mass spectrometry including fast continuous selected reaction monitoring (SRM) acquisitions with or without ion trapping.

## INTRODUCTION

Modern Quantitative analyzers, such as triple quadrupole mass spectrometers, need to measure hundreds of analytes per second eluting from a chromatography separator. Any time required to prepare the instrument for the next transition is a loss to the duty cycle and speed. Usually, major losses come from the time it takes to switch voltages on optical elements, and the time to allow ions to reach appropriate locations along the ion beam path.

US8604420B2 discloses a mass spectrometer having ion storage with timed pulse output. US2010084552A1 discloses a quadrupole mass spectrometer. US2017047212A1 discloses a mass spectrometer with interleaved acquisition.

Typically, switching times are in the range of 1 to 3 ms, and time of flight of ions in the system is between 0.5 to 2 ms. Thus, to reach current industry standard of 500 transitions (SRMs) per second requires some compromises, and further improvement is needed.

## SUMMARY

In a first aspect, a mass spectrometer includes an ion source, an ion guide, a first gate, a first mass filter, a fragmentation cell, a second mass filter, a detector, and a controller. The ion source is configured to produce an ion beam from a sample. The first mass filter is configured to selectively transmit ions within a mass-to-charge range and reject ions outside of the mass-to-charge range. The second mass filter is configured to selectively transmit ions within a mass-to-charge range and reject ions outside of the mass-to-charge range. The detector is configured to measure the intensity of the transmitted ion beam. The controller is configured to close the first ion gate to prevent ions from entering the first mass filter; switch a first quadrupole voltage of the first mass filter to a voltage of a first transition; and open the first ion gate to allow ions to enter the first mass filter. The opening is offset from the switching by a settling time of the first mass filter. The settling time includes the time required to adjust the voltage of the first mass filter. The controller is further configured to switch a fragmentation cell collision energy to a collision energy for the first transition, switching the collision energy is offset in time from switching the first quadrupole voltage by an amount of time not greater than a time it takes for ions entering the first mass filter to exit the first mass filter.

In various embodiments of the first aspect, switching the first quadrupole voltage can be offset from closing the first gate by a first mass filter flight time. The first mass filter flight time can include the time required for ions entering the first mass filter prior to closing the first gate to exit the first mass filter.

In various embodiments of the first aspect, the controller can be configured to cause the detector to continuously acquire ion intensity measurements

In various embodiments of the first aspect, closing the first gate can trap ions in the ion guide.

In various embodiments of the first aspect, the controller can be further configured to switch a second quadrupole voltage of a second mass filter to a voltage of the first transition, switching the second quadrupole voltage can be offset in time from switching the first quadrupole voltage by an amount of time not greater than a time it takes for ions entering the first mass filter to exit the collision cell. In particular embodiments, switching second mass filter voltage can be offset by an amount of time not less than a settling time of the first mass filter or an opening time of the first gate.

In various embodiments of the first aspect, the controller can be further configured to switch a detector gain to a gain for the first transition, switching the detector gain can be offset in time from switching the first quadrupole voltage by an amount of time not greater than a time it takes for ions entering the first mass filter to exit the second mass filter. In particular embodiments, switching the detector gain can be offset by an amount of time not less than a settling time of the first mass filter or an opening time of the first gate.

In various embodiments of the first aspect, the controller can be further configured to switch the first quadrupole voltage of a first mass filter to a voltage of a second transition after an amount of time not less than the time it takes for ions entering the first mass filter to exit the first mass filter and closing the first ion gate to prevent ions from entering the first mass filter during a settling time.

In various embodiments of the first aspect, the mass spectrometer can further comprising a second gate located between the fragmentation cell and the second mass filter. In particular embodiments, the controller can be further configured to close the second ion gate to prevent ions from entering the second mass filter during a second settling time, the second settling time including the time required to adjust the voltage of the second mass filter. In particular embodiments, switching the second quadrupole voltage can be offset from closing the second ion gate by a second mass filter flight time, the second mass filter flight time including the time required for ions entering the second mass filter prior to closing the second gate to exit the second mass filter. In further embodiments, closing the second gate can trap ions in the fragmentation cell.

In a second aspect, a method not forming part of the invention which may be implemented on a mass spectrometer according to the invention can include closing a first ion gate to prevent ions from entering a first quadrupole; switching a first quadrupole voltage of the first quadrupole to a voltage of a first transition; opening the first ion gate to allow ions to enter the first quadrupole, the opening can be offset from the switching by a settling time of the first mass filter, the settling time can include the time required to adjust the voltage of the first mass filter; switching a collision cell collision energy to a collision energy for the first transition, switching the collision energy offset in time from switching the first quadrupole voltage by an amount of time not greater than a time it takes for ions entering the first quadrupole to exit the first quadrupole; switching a second quadrupole voltage of a second quadrupole to a voltage of the first transition, switching the second quadrupole voltage offset in time from switching the first quadrupole voltage by an amount of time not greater than a time it takes for ions entering the first quadrupole to exit the collision cell; switching a detector gain to a gain for the first transition, switching the second quadrupole voltage offset in time from switching the first quadrupole voltage by an amount of time not greater than a time it takes for ions entering the first quadrupole to exit the second quadrupole; and closing the first ion gate to prevent ions from entering the quadrupole after an amount of time not less than the time it takes for ions entering the first quadrupole to exit the first quadrupole and switching the first quadrupole voltage of the first quadrupole to a voltage of a second transition.

In various embodiments of the second aspect, switching of the first quadrupole voltage can be offset from the closing by a first mass filter flight time including the time required for ions entering the first mass prior to closing the first gate to exit the first mass filter.

In various embodiments of the second aspect, the method can further include closing a second ion gate to prevent ions from entering the second quadrupole during a second settling time, the second settling time can include the time required to adjust the voltage of the second quadrupole. In particular embodiments, switching the second quadrupole voltage can be offset from the closing the second ion gate by a second mass filter flight time, the second mass filter flight time including the time required for ions entering the second quadrupole prior to closing the second gate to exit the second quadrupole.

In various embodiments of the second aspect, the method can further include ionizing a sample to form an ion beam.

In various embodiments of the second aspect, the method can further include detecting the intensity of the ion beam. In particular embodiments, detecting the intensity of the ion beam can be continuous.

In various embodiments of the second aspect, switching the collision energy can be offset by an amount of time not less than a settling time of the first quadrupole or an opening time of the first gate.

In various embodiments of the second aspect, switching the second quadrupole voltage can be offset by an amount of time not less than a settling time of the first quadrupole or an opening time of the first gate.

In various embodiments of the second aspect, switching the detector gain can be offset by an amount of time not less than a settling time of the first quadrupole or an opening time of the first gate.

In a third aspect, a method not forming part of the invention which may be implemented on a mass spectrometer according to the invention can include closing a first ion gate to prevent ions from entering the first quadrupole and trap the ions in an ion guide; switching a first quadrupole voltage of a first quadrupole to a voltage of a first transition and, wherein the trapping of ions is correlated with the change in the first quadrupole voltage; opening the first ion gate after a settling time to allow the ions to enter the first quadrupole; the settling time including the time required to adjust the voltage of the first quadrupole; switching a collision cell collision energy to a collision energy for the first transition, switching the collision energy offset in time from switching the first quadrupole voltage by an amount of time not greater than a time it takes for ions entering the first quadrupole to exit the first quadrupole; switching a second quadrupole voltage of a second quadrupole to a voltage of the first transition, switching the second quadrupole voltage offset in time from switching the first quadrupole voltage by an amount of time not greater than a time it takes for ions entering the first quadrupole to exit the collision cell; switching a detector gain to a gain for the first transition; switching the second quadrupole voltage offset in time from switching the first quadrupole voltage by an amount of time not greater than a time it takes for ions entering the first quadrupole to exit the second quadrupole; and closing the first ion gate to prevent ions from entering the first quadrupole after an amount of time not less than the time it takes for ions entering the first quadrupole to exit the first quadrupole and switching the first quadrupole voltage of a first quadrupole to a voltage of a second transition.

In various embodiments of the third aspect, switching the first quadrupole voltage can be offset from closing the first gate by a first mass filter flight time, the first mass filter flight time can include the time required for ions entering the first quadrupole prior to closing the first gate to exit the first quadrupole.

In various embodiments of the third aspect, the trapping of ions can occur only during the settling time.

In various embodiments of the third aspect, there can be a substantially continuous stream of ions entering the first quadrupole between switching the first quadrupole voltage to the voltage of the first transition and switching the first quadrupole voltage to the voltage of the second transition.

In various embodiments of the third aspect, the method can further include closing a second ion gate to prevent ions from entering the second quadrupole during a second settling time, the second settling time can include the time required to adjust the voltage of the second quadrupole. In particular embodiments, switching the second quadrupole voltage can be offset from the closing the second ion gate by a second mass filter flight time, the second mass filter flight time including the time required for ions entering the second quadrupole prior to closing the second gate to exit the second quadrupole.

In various embodiments of the third aspect, the method can include ionizing a sample to form an ion beam.

In various embodiments of the third aspect, the method can further include detecting the intensity of the ion beam. In particular embodiments, detecting the intensity of the ion beam can be continuous.

In various embodiments of the third aspect, switching the collision energy can be offset by an amount of time not less than a settling time of the first quadrupole or an opening time of the first gate.

In various embodiments of the third aspect, switching second quadrupole voltage can be offset by an amount of time not less than a settling time of the first quadrupole or an opening time of the first gate.

In various embodiments of the third aspect, switching the detector gain can be offset by an amount of time not less than a settling time of the first quadrupole or an opening time of the first gate.

## DRAWINGS

For a more complete understanding of the principles disclosed herein, and the advantages thereof, reference is now made to the following descriptions taken in conjunction with the accompanying drawings, in which:

Figure 1 is a block diagram of an exemplary mass spectrometry system, in accordance with various embodiments.

Figure 2 is a timing diagram illustrating the operation of a triple quadrupole, in accordance with various embodiments.

Figure 3 is a block diagram illustrating an exemplary triple quadrupole, in accordance with various embodiments.

Figure 4 is a flow diagram illustrating an exemplary method of operating a triple quadrupole, in accordance with various embodiments.

Figures 5, 6, 7, and 8 are timing diagrams illustrating the operation of a triple quadrupole, in accordance with various embodiments.

Figure 9 is a flow diagram illustrating an exemplary method of operating a triple quadrupole, in accordance with various embodiments.

Figure 10 are timing diagrams illustrating the operation of a triple quadrupole, in accordance with various embodiments.

Figure 11 is a block diagram illustrating an exemplary data analysis system, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

## DESCRIPTION OF VARIOUS EMBODIMENTS

Embodiments of systems and methods for ion separation are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the scope of the invention as defined by the appended claims.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

## MASS SPECTROMETRY PLATFORMS

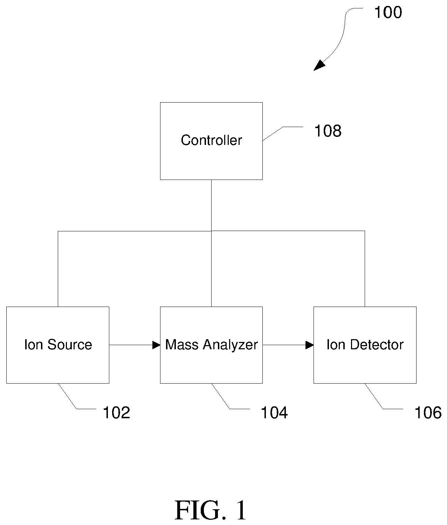

Various embodiments of mass spectrometry platform 100 can include components as displayed in the block diagram of Figure 1. In various embodiments, elements of Figure 1 can be incorporated into mass spectrometry platform 100. According to various embodiments, mass spectrometer 100 can include an ion source 102, a mass analyzer 104, an ion detector 106, and a controller 108.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the mass analyzer 104 can separate ions based on a mass-to-charge ratio of the ions. For example, the mass analyzer 104 can include a quadrupole mass filter analyzer, a quadrupole ion trap analyzer, a time-of-flight (TOF) analyzer, an electrostatic trap (e.g., Orbitrap) mass analyzer, Fourier transform ion cyclotron resonance (FT-ICR) mass analyzer, and the like. In various embodiments, the mass analyzer 104 can also be configured to fragment the ions using collision induced dissociation (CID) electron transfer dissociation (ETD), electron capture dissociation (ECD), photo induced dissociation (PID), surface induced dissociation (SID), and the like, and further separate the fragmented ions based on the mass-to-charge ratio.

In various embodiments, the ion detector 106 can detect ions. For example, the ion detector 106 can include an electron multiplier, a Faraday cup, and the like. Ions leaving the mass analyzer can be detected by the ion detector. In various embodiments, the ion detector can be quantitative, such that an accurate count of the ions can be determined.

In various embodiments, the controller 108 can communicate with the ion source 102, the mass analyzer 104, and the ion detector 106. For example, the controller 108 can configure the ion source or enable/disable the ion source. Additionally, the controller 108 can configure the mass analyzer 104 to select a particular mass range to detect. Further, the controller 108 can adjust the sensitivity of the ion detector 106, such as by adjusting the gain. Additionally, the controller 108 can adjust the polarity of the ion detector 106 based on the polarity of the ions being detected. For example, the ion detector 106 can be configured to detect positive ions or be configured to detected negative ions.

## HIGH DUTY CYCLE SRM

Several approaches have been suggested to improve timing and duty cycle. In one of them, continuous acquisition without waiting (settling) time is proposed (Waters US8859955B2) while the switching of elements is essentially asynchronous to acquisition of specific SRMs. In this method, the difficulty comes with a need to distinguish signals from two adjacent transitions which can often overlap.

In another approach (Waters US10062557B2), switching of elements starts before the acquisition ends. This allows recovery of a portion of ions that still travel through the device after the switch. However, the duty cycle is not fully recovered, and some prior knowledge or calculation of time of flight of all ions in all conditions is required.

Yet in another approach by Jeol (US8604420B2), uses repeated storage and pulsing of ions into the quadrupole mass filters. This can avoid transmitting ions through the quadrupole while voltages are changing. However, this prior art does not teach time exact coordination between switching times with "ion pulsing" that is necessary to maximize duty cycle and minimize number of trapped ions. It also does not describe the option of discarding ions by the gate operation.

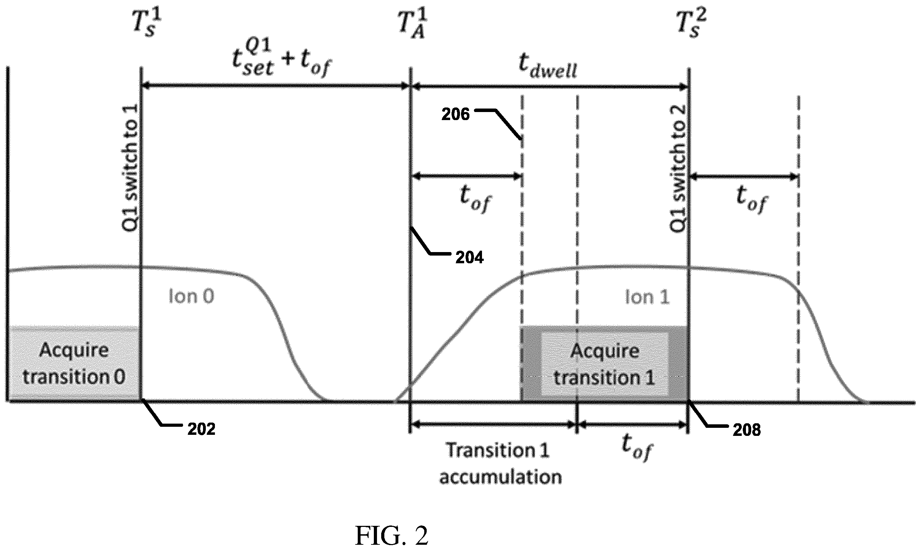

Figure 2 illustrates typical operation of a triple quadrupole. At 202, the voltages on Quadrupole 1 can be switched to a first transition. When a precursor switching occurs, there may be no acquisition while voltages on the Quadrupole 1 (and other associated optics) are settling ( $t_{set}^{Q1}$ ), and ions of the second type travel to the detector ($t_o\varepsilon$). During the settling time, the voltages on Quadrupole 1 can be in flux, and thus Quadrupole 1 may not effectively isolate the precursor ions of transition 1. Once the voltages have stabilized at 204, it can be necessary to wait for the ions to travel to the detector. At 206, the acquisition can begin and can occur over the duration of the dwell time ($t_{dwell}$). At 208, the voltages on Quadrupole 1 can be switched to a second transition, terminating the acquisition of transition 1. If dwell time is short then the duty cycle can be low as a large portion of time is lost waiting. In addition, when a switch to the next precursor occurs, a large fraction of the current precursor ions may not be detected, as they (or, rather, their fragments) need certain time to reach the detector ($t_{of}$).

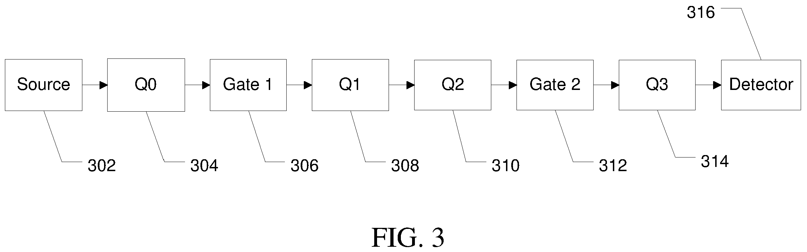

Figure 3 shows the general structure of a Triple Quadrupole Mass Spectrometer 300. The Triple Quadrupole Mass Spectrometer can include a source 302, a multipole 304, a gate 306, quadrupoles 308 and 310, a gate 312, quadrupole 314, and detector 316. Source 302 can be similar to source 102 in Figure 1 and detector 316 can be similar to detector 106 in Figure 1.

Multipole 304 functions as an ion guide. Quadrupoles 308 and 314 can function as mass filters, and quadrupole 310 can function as a fragmentation cell by colliding the ions with a gas such that energy from the collisions can result in fragmentation of precursor ions. In addition to traditional elements, the gates 306 and 312 located at the entrance to quadrupoles 308 and 314 can be used to transmit ions through, block/reject them, or accumulate them for subsequent injection down the path. The key requirement for the Gates is the ability to switch between modes much faster than the quadrupole switching time (t << 1 ms).

In various embodiments, the ion guides 304 and 310 can be used to trap ions when gates 306 or 312 are closed.

There can be four main benefits to the disclosed device and methods. The first one assures that the calculated ion intensity is always representative of the ion signal for confident quantitation. This can be a challenge when electronics are being switched, and ion beams take some time to fully establish themselves. Thus, for a certain amount of time, the signal intensity can be below (or, rarely, above) the expected normal level, which can lead to incorrect intensity calculation. For the correct result, the full number of ions entering the MS should be measured, and the time interval of their entry should also be known precisely.

Second, it is beneficial to have continuous data acquisition as opposed to having to stop and restart acquiring data for different SRM transitions. This can reduce overhead time for setting up digital detection system for the next ion. Additionally, since the acquisition is continuous, the burden of determining which time interval of the acquired data corresponds to which ion can be shifted to post-processing if necessary. In various embodiments, the data acquisition can be continuous throughout a run, especially continuous between one closing of the first gate and another closing of the first gate. That is, detecting the intensity of the ion beam can include continuously acquiring ion intensity measurements between a first closing of the first gate and a second closing of the first gate, and even throughout a run without having gaps between transitions.

Third, the ions entering MS during the time of switching of different devices (mainly, Q1, Q2 and Q3) is typically wasted and is referred to as "settling time" when no acquisition occurs. It is possible to avoid duty cycle losses by trapping ions at the entrance to the quadrupoles, and, in best case, increase duty cycle up to 100%. An additional benefit from high duty cycle is the increased switching frequency that could allow for SRM speeds of up to 1000 $s^{-1}$ or higher.

Fourth, the use of input gates to the quadrupoles highly reduces likelihood of overlapping signals from different transitions on the detector, which removes concern about channel cross-talk, and, again, allows pushing the duty cycle to approximately 100%.

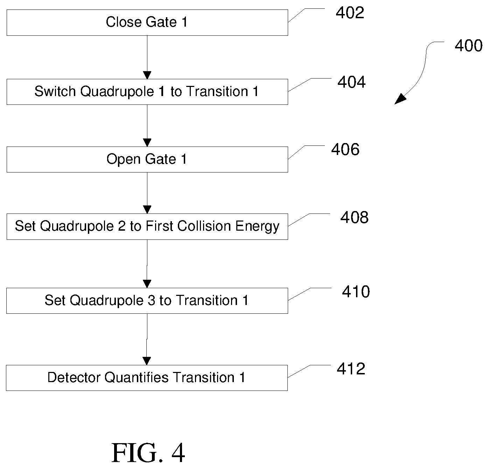

Figure 4 is a flow diagram illustrates a method 400 of operating a triple quadrupole using a gate before the Q1 to improve the utilization. At 402, gate 1 can be closed to prevent ions from entering quadrupole 1, and at 404 quadrupole 1 can be switched to transition 1. In various embodiments, sufficient time can be allowed for ions that entered quadrupole 1 prior to gate 1 closing to exit quadrupole 1 prior to switching quadrupole 1. If ions are still in quadrupole 1 as the voltages are switched, ions of unknown mass-to-charge ratio may traverse quadrupole 1. Specifically, since the voltages/amplitudes are moving between the transition 0 and transition 1, any ions that make it through the quadrupole may not belong to the transition 0 or to transition 1. Since the detection is continuous, these unknown ions may be detected as part of the trailing edge of the previous transition and cause an error in the integration of the ion intensity.

After the voltages have stabilized in quadrupole 1, the gate can be opened, as indicated at 406. At 408, quadrupole 2 can be set to the collision energy for transition 1, and at 410, quadrupole 3 can be set to transition 1. The switch of quadrupole 2 and 3 can be timed to allow ions that exited quadrupole 1 prior the switch of quadrupole 1 to travel along the path to the detector, allowing a greater portion of the time to be devoted to acquisition. If quadrupole 2 and quadrupole 3 are switched concurrently with quadrupole 1, all the ions along the path would need to be discarded and the entire duration of $t_{of}$ would be lost. At 412, the detector quantifies transition 1.

In various embodiments, closing the gate at 402 can cause ions arriving at the gate to be discarded while the trap is closed. Ions arriving at the gate when the gate is opened at 406 can pass through the gate and enter quadrupole 1. In other embodiments, closing the gate at 402 can trap ions in a multipole/ion guide upstream of the gate. When the gate is opened at 406, the trapped ions can be released into quadrupole 1.

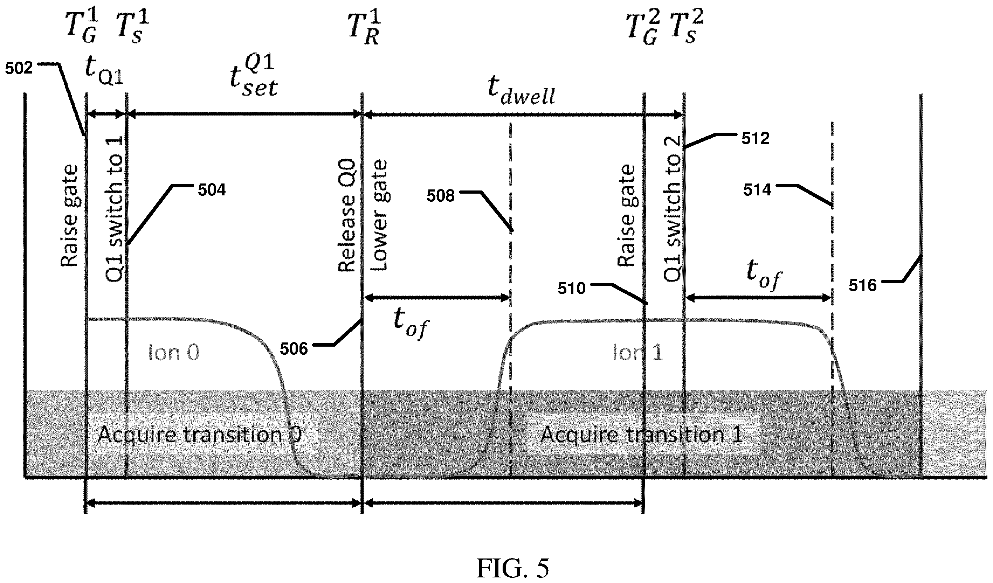

Figure 5 is a timing diagram illustrating method 400. At 502, gate 1 can be closed to prevent ions from entering Q1. Closing the gate can substantially prevent ions from traversing Q1 during the settling time while the voltages are in flux and may allow ions of different m/z to pass through Q1. At 504, after a delay $t_{Q1}$ corresponding to the time it takes for ions to already in Q1 to exit Q1, Q1 can be switched to transition 1. After the settling ( $t_{set}^{Q1}$ ), gate 1 is lowered to allow ions to enter Q1, as shown at 506. Additionally, Q2 Collision Energy and Q3 voltages can be set to the transition 1. By offsetting the switch of Q2 and Q3 from the switch of Q1, ions that had traversed Q1 at time 502 can continue along the path to the detector providing an extended acquisition time.

Also at 506, the detector can begin acquisition of data for transition 1. When $t_{set}^{Q1} > t_{of}$, ions from transition 0 will reach the detector during the period of time gate 1 is closed. Additionally, ions are unable to enter Q1 until the gate 1 opens. Thus, there is a gap in time equivalent to $t_{set}^{Q1}$ between the last ions from transition 0 reaching the detector and the first ions from transition 1 reaching the detector. At 508, after the travel time to the detector ($t_{of}$), ions that first entered Q1 at 506 can reach the detector. At 510, gate 1 can again be closed to prevent ions from entering Q1, and at 512, Q1 can be switched to transition 2. By 514 the packet of ions has largely arrived to the detector. Acquisition can continue to 516 while ions that had already entered Q1 prior to closing the gate can continue to travel to the detector. At 516, the gate can be opened and analysis of transition 2 can begin. In various embodiments, the system can integrate the ion intensity from 506 to 516 in quantifying the compound corresponding to transition 1.

The operation of the gate can allow continuous acquisition by the detector so that the only ions that are not detected are the ions arriving to Q1 when the gate is closed during the Q1 settling time. Compared to the conventional operation shown in Figure 2, ions loss due to finite time-of-flight to the detector is avoided, duty cycle is improved and higher SRM speed can be achieved.

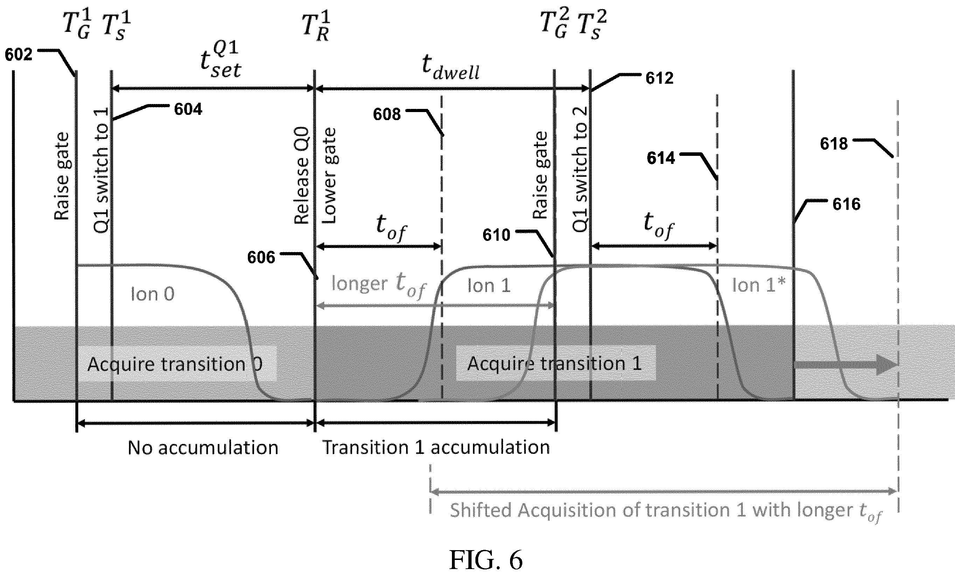

The scheme in Figure 5 assumes that $t_{set}^{Q1} > t_{of}$, in which case the flux of the ions from transition 0 stops before the detection of the transition 1 starts at $T_R^1$. In some embodiments, the time-of-flight is particularly long and $t_{of} > t_{set}^{Q1}$ resulting in ions from the prior transition reaching the detector after the gate is opened. This can be addressed by two different means. First, $t_{of}$ can be reduced by speeding up ions through the system with stronger axial fields. The second approach lies purely in the domain of data processing and executes the appropriate shift of the time interval where the signal for the corresponding transition is assigned (see Figure 6). The adjusted timing for the ion signal is shown there in blue color. This can be done either in real-time or post-processing.

As with Figure 5, Figure 6 is a timing diagram similar to Figure 5 except $t_{of} > t_{set}^{Q1}$. At 602, gate 1 can be closed. At 604, after a delay $t_{Q1}$ corresponding to the time it takes for ions to already in Q1 to exit Q1, Q1 can be switched to transition 1. After the settling ($t_{set}^{Q1}$), gate 1 is lowered to allow ions to enter Q1, as shown at 606. Q2 Collision Energy and Q3 voltages can be set to the transition 1, and the detector can begin acquisition for transition 1. However, with $t_{of} > t_{set}^{Q1}$, ions of transition 1 can be delayed in reaching the detector and the ions may not reach the detector until 608 rather than at 606. At 610, gate 1 can again be closed to prevent ions from entering Q1, and, at 612, Q1 can be switched to transition 2. Additionally, instead of the ions from transition 1 stopping at 614, the ion flow from transition 1 can continue past the time when the gate is opened at 616. Since acquisition is continuous throughout the process, the delay in ion arrival can be accounted for by shifting the acquisition time by the appropriate amount to account for transition 1 ions until 618. The shift can be calibrated or calculated based on the known properties of the system.

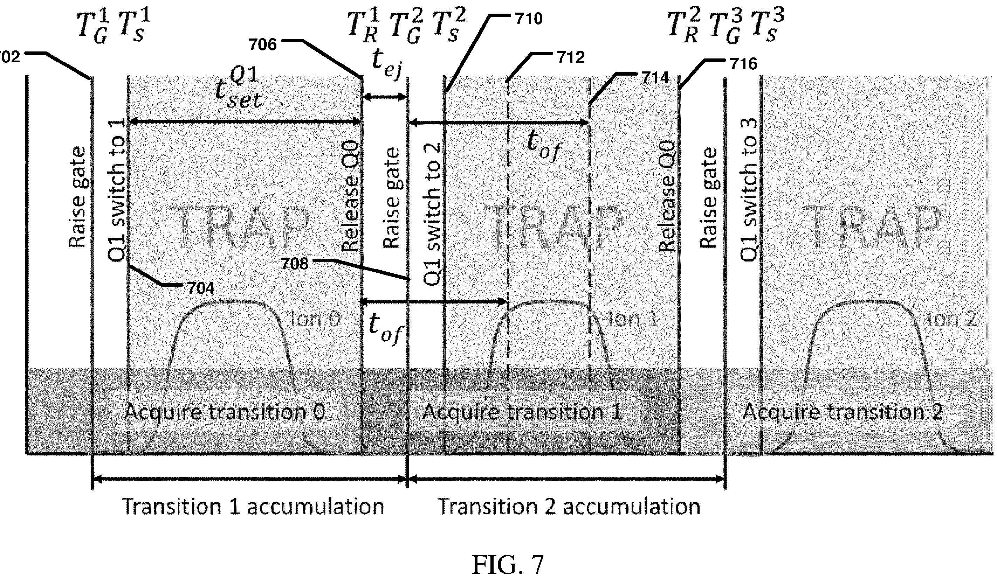

While the approach described in Figures 4 through 6 helps improve the duty cycle, even better gains can be achieved if storage (trapping) of ions is used. Figure 7 shows a timing diagram when trapping of ions in Q0 occurs during the time gate 1 is closed.

At 702, gate 1 can be closed to start accumulating ions in Q0. At 704, after a delay allowing for ions to already in Q1 to exit Q1, Q1 can be switched to transition 1. At 706, gate 1 can be opened to allow the ions trapped in Q0 to enter Q1. Additionally, Q2 Collision Energy and Q3 voltages can be set to the transition 1, and the detector can begin acquisition of data for transition 1. At 708, after sufficient time for ejection of the ions from Q0 into Q1, the gate can be closed. At 710, after a delay allowing for ions to already in Q1 to exit Q1, Q1 can be switched to transition 2. During the settling time for transition 2, the ions of transition 1 can be detected (largely between 712 and 714) and integrated for the entire interval between 706 and 716. At 716, the gate can be opened for transition 2.

Compared to the scheme in Figure 5, the time interval $t_{ej}$ between 706 and 708 can be selected in a way to allow the ions trapped in Q0 to enter Q1. Because of stopping and releasing ions, the ion peak profile on the detector can be narrower in the time domain which can substantially eliminate the possibility of cross-talk. However, the number of the ions detected represents the full amount of time $t_{set}^{Q1} + t_{ej}$ due to trapping the ions for the duration of $t_{set}^{Q1}$. This can lead to duty cycle of about 100% and potentially very fast SRM speed.

As a practical example, if $t_{set}^{Q1} + t_{ej}$ is under 2ms then over 500 unique precursor transitions can be acquired per second. This is a considerably improvement over the current state of the art.

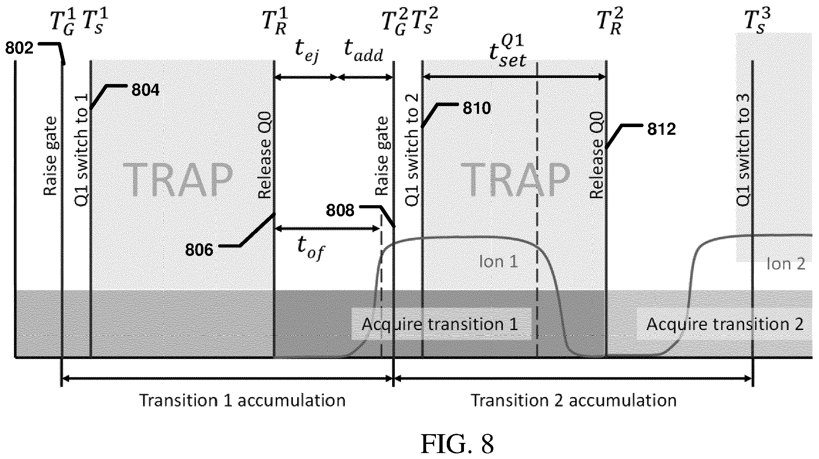

The approach shown in Figure 7 corresponds to the shortest effective dwell time possible. If a method can have longer dwell time for transitions, an additional time $t_{add}$ can be used to extend the time between subsequent trapping events as shown in Figure 8. The additional benefit of this approach is in the fact that it can work for both short and long dwell times. Since trapping period is short and fixed, there is little risk of overfilling Q0 charge capacity.

At 802, gate 1 can be closed to start accumulating ions in Q0. After allowing for ions already in Q1 to exit Q1, Q1 can be switched to transition 1 at 804. At 806, gate 1 can be opened to allow the ions trapped in Q0 to enter Q1. Additionally, Q2 Collision Energy and Q3 voltages can be set to the transition 1, and the detector can begin acquisition of data for transition 1. In this particular case of a longer dwell time the gate can be closed at a later time of 808 and Q1 can be switched to transition 2 at 810. This extends the open gate period by $t_{add}$. During the settling time for transition 2, the ions of transition 1 can be detected and integrated between 806 and 812. At 812, the gate can be opened for transition 2.

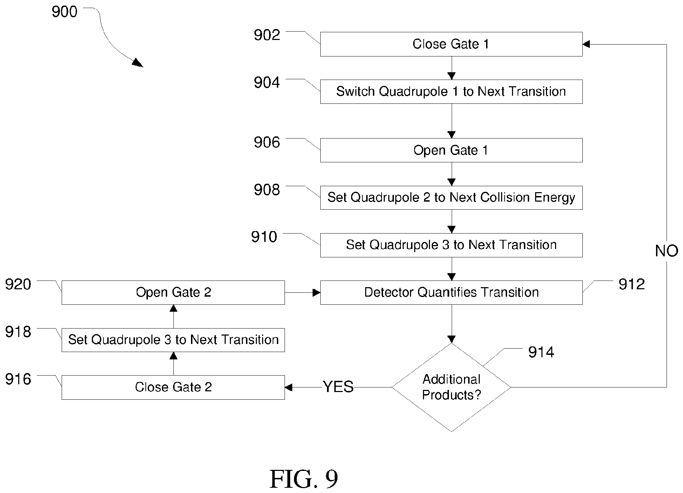

Figure 9 is a flow diagram illustrating a method 900 of operating a triple quadrupole using a gate before the Q1 and a gate before Q3 to improve the utilization. At 902, gate 1 can be closed to prevent ions from entering quadrupole 1, and at 904 quadrupole 1 can be switched to select the precursor ion of the next transition to select the precursor ion. After the voltages have stabilized in quadrupole 1, the gate can be opened, as indicated at 906.

At 908, quadrupole 2 can be set to the collision energy for transition 1, and at 910, quadrupole 3 can be set to select the product ion of the next transition. The switch of quadrupole 2 and 3 can be timed to allow ions that exited quadrupole 1 prior the switch of quadrupole 1 to travel along the path to the detector, allowing a greater portion of the time to be devoted to acquisition. If quadrupole 2 and quadrupole 3 are switched concurrently with quadrupole 1, all the ions along the path would need to be discarded and the entire duration of $t_{of}$ would be lost.

At 912, the detector quantifies the transition. At 914, it can be determined if there are additional product ions using the same precursor ion (or a precursor ion of similar m/z). If there are additional transitions with the same precursor m/z range, gate 2 can be closed, as indicated at 916. At 918, quadrupole 3 can be set to selected the product ion of the next transition and, at 920, gate 2 can be opened after the voltages on quadrupole 3 have settled. The method then returns to 912 for quantification of the transition.

When no additional product ions are selected for the same precursor m/z range, the method can return to 902 for selection of another precursor.

In various embodiments, ions arriving at gate 1 or gate 2 can be discarded when the gate is closed. Ions arriving at gate 1 or gate 2 when the gate is opened can pass through the gate to subsequent quadrupoles. In other embodiments, closing gate 1 or gate 2 can be cause ions to be trapped upstream of the gate. The trapped ions can be released when the gate is opened. When trapping ions, ions can be sent as packets with higher intensity than the ion stream as the target ions are accumulated over time and released together. In trapping mode, it can be necessary to return to 902 from 914 even if there are multiple target product ions for a single parent ion.

In various embodiments, the collision energy can be changed between a first product ion to a second product ion of the same parent ion, such as at 918. When that occurs, it can be necessary to ensure gate 2 is closed long enough for the collision energy to change and ions entering quadrupole 2 prior to the collision energy settling to be discarded.

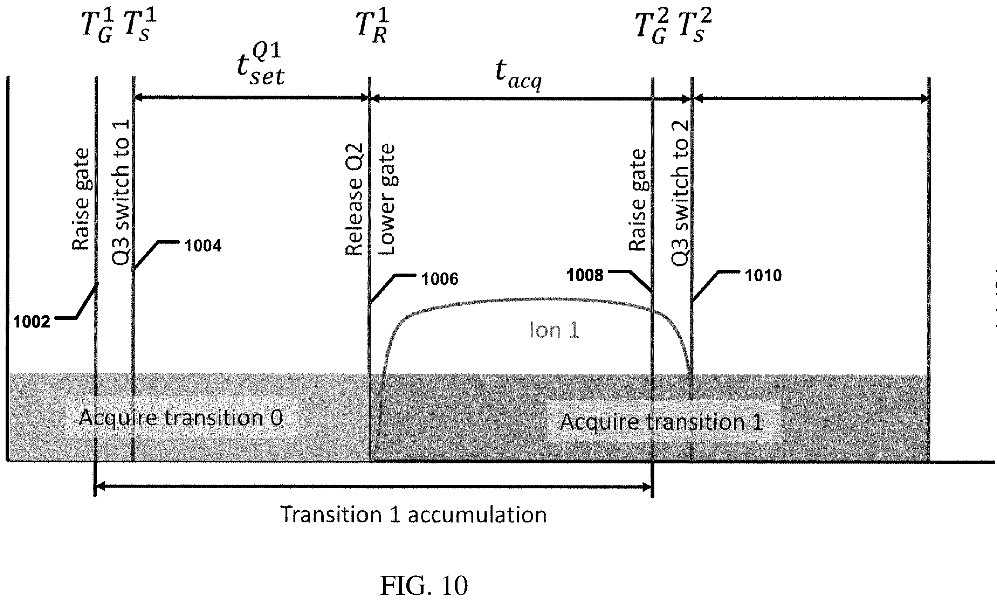

Figure 10 provides a timing illustration when only Q3 is switched in case of multiple products for the same precursor. Normally, the switching time is again lost from total acquisition time. However, in this case, at 1002, Gate 2 can be closed to start accumulating ions in Q2, and, after sufficient time for ions in Q3 to exit Q3, Q3 can be switched to transition 1 at 1004. After Q3 voltages are settled at 1006, Gate 2 can be opened to allow ions to enter Q3 and the detection system can starts to quantify the transition 1. At 1008, Gate 2 can be closed to start accumulating ions in Q2, and Q3 can be switched to transition 2 at 1010.

Similar to the previous cases, a duty cycle up to the 100% can be achieved. In this estimate, an obvious omission of time-of- flight from Q3 to the detector is done, however, that would only alter the situation to a small degree, as this particular $t_{of}$ is relatively short compared to the overall $t_{of}$ through Q1, Q2, and Q3.

## COMPUTER-IMPLEMENTED SYSTEM

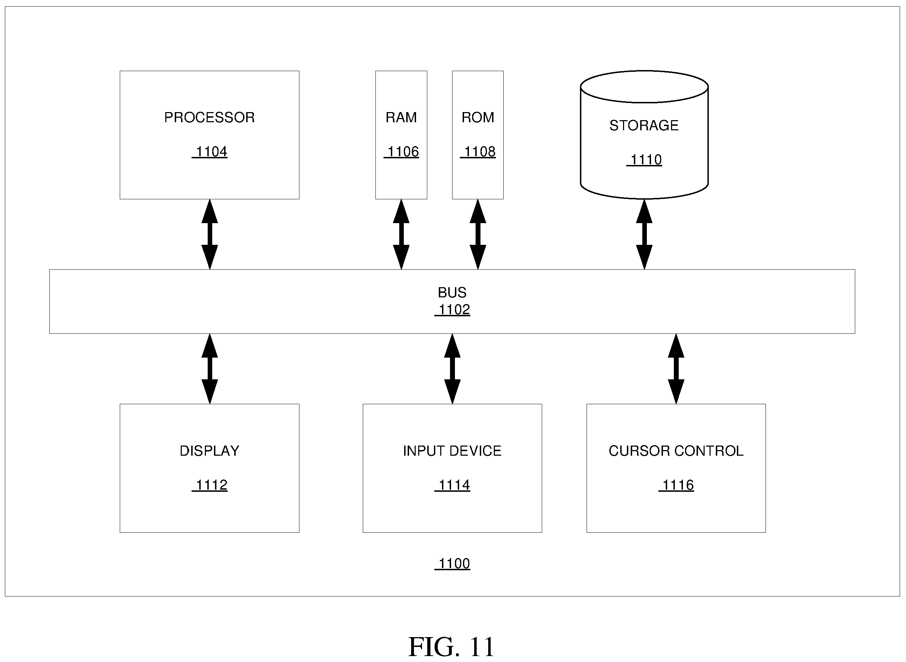

Figure 11 is a block diagram that illustrates a computer system 1100, upon which embodiments of the present teachings may be implemented as which may incorporate or communicate with a system controller, for example controller 108 shown in Figure. 1, such that the operation of components of the associated mass spectrometer may be adjusted in accordance with calculations or determinations made by computer system 1100. In various embodiments, computer system 1100 can include a bus 1102 or other communication mechanism for communicating information, and a processor 1104 coupled with bus 1102 for processing information. In various embodiments, computer system 1100 can also include a memory 1106, which can be a random access memory (RAM) or other dynamic storage device, coupled to bus 1102, and instructions to be executed by processor 1104. Memory 1106 also can be used for storing temporary variables or other intermediate information during execution of instructions to be executed by processor 1104. In various embodiments, computer system 1100 can further include a read only memory (ROM) 1108 or other static storage device coupled to bus 1102 for storing static information and instructions for processor 1104. A storage device 1110, such as a magnetic disk or optical disk, can be provided and coupled to bus 1102 for storing information and instructions.

In various embodiments, computer system 1100 can be coupled via bus 1102 to a display 1112, such as a cathode ray tube (CRT) or liquid crystal display (LCD), for displaying information to a computer user. An input device 1114, including alphanumeric and other keys, can be coupled to bus 1102 for communicating information and command selections to processor 1104. Another type of user input device is a cursor control 1116, such as a mouse, a trackball or cursor direction keys for communicating direction information and command selections to processor 1104 and for controlling cursor movement on display 1112. This input device typically has two degrees of freedom in two axes, a first axis (i.e., x) and a second axis (i.e., y), that allows the device to specify positions in a plane.

A computer system 1100 can perform the present teachings. Consistent with certain implementations of the present teachings, results can be provided by computer system 1100 in response to processor 1104 executing one or more sequences of one or more instructions contained in memory 1106. Such instructions can be read into memory 1106 from another computer-readable medium, such as storage device 1110. Execution of the sequences of instructions contained in memory 1106 can cause processor 1104 to perform the processes described herein. In various embodiments, instructions in the memory can sequence the use of various combinations of logic gates available within the processor to perform the processes describe herein. Alternatively hard-wired circuitry can be used in place of or in combination with software instructions to implement the present teachings. In various embodiments, the hard-wired circuitry can include the necessary logic gates, operated in the necessary sequence to perform the processes described herein. Thus implementations of the present teachings are not limited to any specific combination of hardware circuitry and software.

While the present teachings are described in conjunction with various embodiments, it is not intended that the present teachings be limited to such embodiments. On the contrary, the present teachings encompass various alternatives, modifications, and equivalents, as will be appreciated by those of skill in the art. The scope of the invention is defined by the appended claims.

**Claims**

1. A mass spectrometer (100) comprising:

    an ion source (302) configured to produce an ion beam from a sample,
    an ion guide (304);
    a first gate (306);
    a first mass filter (308) configured to selectively transmit ions within a mass-to-charge range and reject ions outside of the mass-to-charge range;
    a fragmentation cell (312);
    a second mass filter (314) configured to selectively transmit ions within a mass-to-charge range and reject ions outside of the mass-to-charge range;
    a detector (316) configured to measure the intensity of the transmitted ion beam; and
    a controller (108) configured to:

        close the first ion gate (306) to prevent ions from entering the first mass filter (308);
        switch a first quadrupole voltage of the first mass filter (308) to a voltage of a first transition; and
        open the first ion gate (306) to allow ions to enter the first mass filter (308), the opening offset from the switching by a settling time of the first mass filter (308), the settling time including the time required to adjust the voltage of the first mass filter (308);
        **characterised in that** the controller is further configured to:
        switch a fragmentation cell collision energy to a collision energy for the first transition, wherein switching the collision energy is offset in time from switching the first quadrupole voltage by an amount of time not greater than a time it takes for ions entering the first mass filter (308) to exit the first mass filter (308).

2. The mass spectrometer (100) of claim 1, wherein switching the first quadrupole voltage is offset from closing the first gate (306) by a first mass filter flight time, the first mass filter flight time including the time required for ions entering the first mass filter (308) prior to closing the first gate (306) to exit the first mass filter (308).

3. The mass spectrometer (100) of claim 1, wherein the controller (108) is further configured to cause the detector (316) to continuously acquire ion intensity measurements.

4. The mass spectrometer (100) of claim 1, wherein closing the first gate (306) traps ions in the ion guide (304).

5. The mass spectrometer (100) of claim1, wherein switching the collision energy is offset by an amount of time not less than a settling time of the first mass filter (308) or an opening time of the first gate (306).

6. The mass spectrometer (100) of claim 1, further comprising a collision cell (310) wherein the controller (108) is further configured to switch a second quadrupole voltage of the second mass filter (314) to a voltage of the first transition, switching the second quadrupole voltage is offset in time from switching the first quadrupole voltage by an amount of time not greater than a time it takes for ions entering the first mass filter (308) to exit the collision cell (310).

7.  The mass spectrometer (100) of claim 6, wherein switching second quadrupole voltage is offset by an amount of time not less than a settling time of the first mass filter (308) or an opening time of the first gate (306).

8.  The mass spectrometer (100) of claim 1, wherein the controller (108) is further configured to switch a detector gain to a gain for the first transition, switching the second quadrupole voltage is offset in time from switching the first quadrupole voltage by an amount of time not greater than a time it takes for ions entering the first mass filter (308) to exit the second mass filter (314).

9.  The mass spectrometer (100) of claim 8, wherein switching the detector gain is offset by an amount of time not less than a settling time of the first mass filter (308) or an opening time of the first gate (306).

10. The mass spectrometer (100) of claim 1, wherein the controller (108) is further configured to switch the first quadrupole voltage of a first mass filter (308) to a voltage of a second transition after an amount of time not less than the time it takes for ions entering the first mass filter (308) to exit the first mass filter (308) and closing the first ion gate (306) to prevent ions from entering the first mass filter (308) during the settling time.

11. The mass spectrometer (100) of claim 1, further comprising a second gate (312) between the fragmentation cell (310) and the second mass filter (314).

12. The mass spectrometer (100) of claim 11, wherein the controller (108) is further configured to close the second ion gate (312) to prevent ions from entering the second mass filter (314) during a second settling time, the second settling time including the time required to adjust the voltage of the second mass filter (314).

13. The mass spectrometer (100) of claim 12, wherein switching the second quadrupole voltage is offset from closing the second ion gate (312) by a second mass filter flight time, the second mass filter flight time including the time required for ions entering the second mass filter (314) prior to closing the second gate (312) to exit the second mass filter (314).

14. The mass spectrometer (100) of claim 12, wherein closing the second gate (312) traps ions in the fragmentation cell (310).

**Patentansprüche**

1.  Massenspektrometer (100), umfassend:

    eine Ionenquelle (302), die konfiguriert ist, um einen Ionenstrahl aus einer Probe zu erzeugen, eine Ionenführung (304); ein erstes Gatter (306); einen ersten Massenfilter (308), der konfiguriert ist, um Ionen innerhalb eines Masse-zu-Ladungs-Bereichs wahlweise durchzulassen und Ionen außerhalb des Masse-zu-Ladungs-Bereichs zurückzuweisen; eine Fragmentierungszelle (312); einen zweiten Massenfilter (314), der konfiguriert ist, um Ionen innerhalb eines Masse-zu-Ladungs-Bereichs wahlweise durchzulassen und Ionen außerhalb des Masse-zu-Ladungs-Bereichs zurückzuweisen; einen Detektor (316), der konfiguriert ist, um die Intensität des durchgelassenen Ionenstrahls zu messen; und eine Steuervorrichtung (108), die konfiguriert ist zum:

    Schließen des ersten Ionengatters (306), um zu verhindern, dass Ionen in den ersten Massenfilter (308) eintreten; Umschalten einer ersten Quadrupolspannung des ersten Massenfilters (308) auf eine Spannung eines ersten Übergangs; und Öffnen des ersten Ionengatters (306), um Ionen in den ersten Massenfilter (308) eintreten zu lassen, wobei das Öffnen gegenüber dem Umschalten um eine Einschwingzeit des ersten Massenfilters (308) versetzt ist, wobei die Einschwingzeit die Zeit, die gebraucht wird, um die Spannung des ersten Massenfilters (308) einzustellen, einschließt; **dadurch gekennzeichnet, dass** die Steuervorrichtung ferner konfiguriert ist zum: Umschalten einer Kollisionsenergie einer Fragmentierungszelle auf eine Kollisionsenergie für den ersten Übergang, wobei das Umschalten der Kollisionsenergie gegenüber dem Umschalten der ersten Quadrupolspannung um einen Zeitraum, der nicht größer ist als eine Zeit, die Ionen benötigen, um in den ersten Massenfilter (308) einzutreten und den ersten Massenfilter (308) zu verlassen, zeitlich versetzt ist.

2. Massenspektrometer (100) nach Anspruch 1, wobei das Umschalten der ersten Quadrupolspannung von dem Schließen des ersten Gatters (306) um eine erste Massenfilterflugzeit versetzt ist, wobei die erste Massenfilterflugzeit die Zeit, die Ionen brauchen, um vor dem Schließen des ersten Gatters (306) in den ersten Massenfilter (308) einzutreten und den ersten Massenfilter (308) zu verlassen, einschließt.

3. Massenspektrometer (100) nach Anspruch 1, wobei die Steuervorrichtung (108) ferner konfiguriert ist, um den Detektor (316) zu veranlassen, Messungen von Ionenintensität kontinuierlich zu erfassen.

4. Massenspektrometer (100) nach Anspruch 1, wobei das Schließen des ersten Gatters (306) Ionen in der Ionenführung (304) einfängt.

5. Massenspektrometer (100) nach Anspruch 1, wobei das Umschalten der Kollisionsenergie um einen Zeitraum, der nicht kleiner ist als eine Einschwingzeit des ersten Massenfilters (308) oder eine Öffnungszeit des ersten Gatters (306), versetzt ist.

6. Massenspektrometer (100) nach Anspruch 1, ferner umfassend eine Kollisionszelle (310), wobei die Steuervorrichtung (108) ferner konfiguriert ist, um eine zweite Quadrupolspannung des zweiten Massenfilters (314) auf eine Spannung des ersten Übergangs umzuschalten, wobei das Umschalten der zweiten Quadrupolspannung gegenüber dem Umschalten der ersten Quadrupolspannung um einen Zeitraum, der nicht größer ist als eine Zeit, die Ionen benötigen, um in den ersten Massenfilter (308) einzutreten und die Kollisionszelle (310) zu verlassen, zeitlich versetzt ist.

7. Massenspektrometer (100) nach Anspruch 6, wobei das Umschalten der zweiten Quadrupolspannung um einen Zeitraum, der nicht kleiner ist als eine Einschwingzeit des ersten Massenfilters (308) oder eine Öffnungszeit des ersten Gatters (306), versetzt ist.

8. Massenspektrometer (100) nach Anspruch 1, wobei die Steuervorrichtung (108) ferner konfiguriert ist, um eine Detektorverstärkung auf eine Verstärkung für den ersten Übergang umzuschalten, wobei das Umschalten der zweiten Quadrupolspannung gegenüber dem Umschalten der ersten Quadrupolspannung um einen Zeitraum, der nicht größer ist als eine Zeit, die Ionen benötigen, um in den ersten Massenfilter (308) einzutreten und den zweiten Massenfilter (314) zu verlassen, zeitlich versetzt ist.

9. Massenspektrometer (100) nach Anspruch 8, wobei das Umschalten der Detektorverstärkung um einen Zeitraum, der nicht kleiner ist als eine Einschwingzeit des ersten Massenfilters (308) oder eine Öffnungszeit des ersten Gatters (306), versetzt ist.

10. Massenspektrometer (100) nach Anspruch 1, wobei die Steuervorrichtung (108) ferner konfiguriert ist, um die erste Quadrupolspannung eines ersten Massenfilters (308) nach einem Zeitraum, der nicht kleiner ist als die Zeit, die in den ersten Massenfilter (308) eintretende Ionen benötigen, um den ersten Massenfilter (308) zu verlassen, auf eine Spannung eines zweiten Übergangs umzuschalten und das erste Ionengatter (306) zu schließen, um zu verhindern, dass Ionen während der Einschwingzeit in den ersten Massenfilter (308) eintreten.

11. Massenspektrometer (100) nach Anspruch 1, ferner umfassend ein zweites Gatter (312) zwischen der Fragmentierungszelle (310) und dem zweiten Massenfilter (314).

12. Massenspektrometer (100) nach Anspruch 11, wobei die Steuervorrichtung (108) ferner konfiguriert ist, um das zweite Ionengatter (312) zu schließen, um zu verhindern, dass Ionen während einer zweiten Einschwingzeit in den zweiten Massenfilter (314) eintreten, wobei die zweite Einschwingzeit die Zeit, die gebraucht wird, um die Spannung des zweiten Massenfilters (314) einzustellen, einschließt.

13. Massenspektrometer (100) nach Anspruch 12, wobei das Umschalten der zweiten Quadrupolspannung gegenüber dem Schließen des zweiten Ionengatter (312) um eine zweite Massenfilterflugzeit versetzt ist, wobei die zweite Massenfilterflugzeit die Zeit, die Ionen brauchen, um vor dem Schließen des zweiten Ionengatters (312) in den zweiten Massenfilter (314) einzutreten und den zweiten Massenfilter (314) zu verlassen, einschließt.

14. Massenspektrometer (100) nach Anspruch 12, wobei das Schließen des zweiten Gatters (312) Ionen in der Fragmentierungszelle (310) einfängt.

**Revendications**

1. Spectromètre de masse (100) comprenant :

     une source d'ions (302) conçue pour générer un faisceau d'ions à partir d'un échantillon,
     un guidage d'ions (304) ;
     une première grille (306) ;
     un premier filtre de masse (308) conçu pour transmettre sélectivement des ions dans une plage masse/charge et rejeter des ions en dehors de la plage masse/charge ;
     une cellule de fragmentation (312) ;
     un second filtre de masse (314) conçu pour transmettre sélectivement des ions dans une plage masse/charge et rejeter des ions en dehors de la plage masse/charge ;

un détecteur (316) configuré pour mesurer l'intensité du faisceau d'ions transmis ; et

un dispositif de commande (108) configuré pour :

fermer la première grille d'ions (306) pour empêcher les ions d'entrer dans le premier filtre de masse (308) ;

commuter une première tension quadripolaire du premier filtre de masse (308) vers une tension d'une première transition ; et

ouvrir la première grille d'ions (306) pour permettre aux ions d'entrer dans le premier filtre de masse (308), l'ouverture étant décalée par rapport à la commutation par un temps de stabilisation du premier filtre de masse (308), le temps de stabilisation comportant le temps nécessaire pour ajuster la tension du premier filtre de masse (308) ;

**caractérisé en ce que** le dispositif de commande est en outre configuré pour : commuter une énergie de collision de cellule de fragmentation vers une énergie de collision pour la première transition, dans lequel la commutation de l'énergie de collision est décalée dans le temps par rapport à la commutation de la première tension quadripolaire d'une durée qui n'est pas supérieure au temps nécessaire pour que les ions entrant dans le premier filtre de masse (308) sortent du premier filtre de masse (308).

2. Spectromètre de masse (100) selon la revendication 1, dans lequel la commutation de la première tension quadripolaire est décalée par rapport à la fermeture de la première grille (306) par un premier temps de vol de filtre de masse, le premier temps de vol de filtre de masse comportant le temps nécessaire pour que les ions entrant dans le premier filtre de masse (308) avant la fermeture de la première grille (306) sortent du premier filtre de masse (308).

3. Spectromètre de masse (100) selon la revendication 1, dans lequel le dispositif de commande (108) est en outre configuré pour amener le détecteur (316) à acquérir en continu des mesures d'intensité d'ions.

4. Spectromètre de masse (100) selon la revendication 1, dans lequel la fermeture de la première grille (306) piège les ions dans le guidage d'ions (304).

5. Spectromètre de masse (100) selon la revendication 1, dans lequel la commutation de l'énergie de collision est décalée d'une durée qui n'est pas inférieure à un temps de stabilisation du premier filtre de masse (308) ou à un temps d'ouverture de la première grille (306).

6. Spectromètre de masse (100) selon la revendication 1, comprenant en outre une cellule de collision (310) dans lequel le dispositif de commande (108) est en outre configuré pour commuter une seconde tension quadripolaire du second filtre de masse (314) vers une tension de la première transition, la commutation de la seconde tension quadripolaire est décalée dans le temps par rapport à la commutation de la première tension quadripolaire d'une durée qui n'est pas supérieure au temps nécessaire pour que les ions entrant dans le premier filtre de masse (308) sortent de la cellule de collision (310).

7. Spectromètre de masse (100) selon la revendication 6, dans lequel la commutation de la seconde tension quadripolaire est décalée d'une durée qui n'est pas inférieure à un temps de stabilisation du premier filtre de masse (308) ou à un temps d'ouverture de la première grille (306).

8. Spectromètre de masse (100) selon la revendication 1, dans lequel le dispositif de commande (108) est en outre configuré pour commuter un gain de détecteur vers un gain pour la première transition, la commutation de la seconde tension quadripolaire est décalée dans le temps par rapport à la commutation de la première tension quadripolaire d'une durée qui n'est pas supérieure au temps nécessaire pour que les ions entrant dans le premier filtre de masse (308) sortent du second filtre de masse (314).

9. Spectromètre de masse (100) selon la revendication 8, dans lequel la commutation du gain de détecteur est décalée d'une durée qui n'est pas inférieure à un temps de stabilisation du premier filtre de masse (308) ou à un temps d'ouverture de la première grille (306).

10. Spectromètre de masse (100) selon la revendication 1, dans lequel le dispositif de commande (108) est en outre configuré pour commuter la première tension quadripolaire d'un premier filtre de masse (308) vers une tension d'une seconde transition après une durée qui n'est pas inférieure au temps nécessaire pour que les ions entrant dans le premier filtre de masse (308) sortent du premier filtre de masse (308) et pour fermer la première grille d'ion (306) afin d'empêcher les ions d'entrer dans le premier filtre de masse (308) pendant le temps de stabilisation.

11. Spectromètre de masse (100) selon la revendication 1, comprenant en outre une seconde grille (312) entre la cellule de fragmentation (310) et le second filtre de masse (314).

**12.** Spectromètre de masse (100) selon la revendication 11, dans lequel le dispositif de commande (108) est en outre configuré pour fermer la seconde grille d'ions (312) afin d'empêcher les ions d'entrer dans le second filtre de masse (314) pendant un second temps de stabilisation, le second temps de stabilisation comportant le temps nécessaire pour ajuster la tension du second filtre de masse (314).

**13.** Spectromètre de masse (100) selon la revendication 12, dans lequel la commutation de la seconde tension quadripolaire est décalée par rapport à la fermeture de la seconde grille d'ions (312) d'un second temps de vol de filtre de masse, le second temps de vol de filtre de masse comportant le temps nécessaire pour que les ions entrant dans le second filtre de masse (314) avant la fermeture de la seconde grille (312) sortent du second filtre de masse (314).

**14.** Spectromètre de masse (100) selon la revendication 12, dans lequel la fermeture de la seconde grille (312) piège les ions dans la cellule de fragmentation (310).

100

108

Controller

Ion Source · · · 102

Mass Analyzer · · · 104

Ion Detector · · · 106

FIG. 1

FIG. 2

EP 3 796 363 B1

| Source | → | Q0 | → | Gate 1 | → | Q1 | → | Q2 | → | Gate 2 | → | Q3 | → | Detector |

302   304   306   308   310   312   314   316

FIG. 3

Close Gate 1 —— 402

—— 400

Switch Quadrupole 1 to Transition 1 —— 404

Open Gate 1 —— 406

Set Quadrupole 2 to First Collision Energy —— 408

Set Quadrupole 3 to Transition 1 —— 410

Detector Quantifies Transition 1 —— 412

FIG. 4

FIG. 5

FIG. 6

FIG. 7

EP 3 796 363 B1

FIG. 8

900

902 — Close Gate 1

904 — Switch Quadrupole 1 to Next Transition

906 — Open Gate 1

908 — Set Quadrupole 2 to Next Collision Energy

910 — Set Quadrupole 3 to Next Transition

NO

920 — Open Gate 2

918 — Set Quadrupole 3 to Next Transition

916 — Close Gate 2

Detector Quantifies Transition — 912

914

Additional Products?

YES

FIG. 9

FIG. 10

| | | |
|---|---|---|
| PROCESSOR 1104 | RAM 1106 ROM 1108 | STORAGE 1110 |

BUS 1102

| | | |
|---|---|---|
| DISPLAY 1112 | INPUT DEVICE 1114 | CURSOR CONTROL 1116 |

1100

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8604420 B2
- US 2010084552 A1
- US 2017047212 A1
- US 8859955 B2
- US 10062557 B2